## Europäisches Patentamt

## European Patent Office

## Office européen des brevets

(19)

(11) Veröffentlichungsnummer: **0 195 457**
**B1**

(12) **EUROPÄISCHE PATENTSCHRIFT**

(45) Veröffentlichungstag der Patentschrift:
06.06.90

(51) Int. Cl.⁵: **G06F 11/00**

(21) Anmeldenummer: 86103913.9

(22) Anmeldetag: 21.03.86

(54) Vorrichtung zur Eigenüberwachung einer Schaltungsanordnung mit einem Mikrocomputer.

(30) Priorität: 22.03.85 DE 3510524

(43) Veröffentlichungstag der Anmeldung:
24.09.86 Patentblatt 86/39

(45) Bekanntmachung des Hinweises auf die Patenterteilung:
06.06.90 Patentblatt 90/23

(84) Benannte Vertragsstaaten:
AT BE CH DE FR GB IT LI NL SE

(56) Entgegenhaltungen:
EP-A- 0 080 214
DE-A- 3 345 863
US-A- 4 072 852
US-A- 4 488 303

IBM TECHNICAL DISCLOSURE BULLETIN, Band 26,
Nr. 10A, März 1984, Seiten 5319-5320, New York, US; L.A.
BLUE et al.: "Automatic restart for microprocessors"
WIRELESS WORLD & ELECTRONICS, Band 90, Nr. 1584,
Oktober 1984, Seite 33, Dunstable, GB;
"Microprocessor failure detector"
IBM TECHNICAL DISCLOSURE BULLETIN, Band 7, Nr. 5,
Oktober 1964, Seiten 348-349, New York, US; B.D. PUNG
et al.: "Program instruction time down device"
PATENTS ABSTRACTS OF JAPAN, Band 7,
Nr. 245 (P-233) [1390], 29. Oktober 1983, Seite 24 P 233;

(73) Patentinhaber: Siemens Aktiengesellschaft,
Wittelsbacherplatz 2, D-8000 München 2(DE)

(72) Erfinder: Lang, Otto, Reschreiterstrasse 17,
D-8000 München 45(DE)

## Beschreibung

Äußere Störeinflüsse können im Mikrocomputer-System Funktionsstörungen bewirken bzw. direkt zum sogenannten Einschlafen des Systems führen. Die Störeinflüsse können insbesondere eine nahezu unbegrenzte Anzahl falscher Programmsequenzen bewirken, Schnittstellenschaltungen bzw. Ports und Zeitschaltungen bzw. Timer umprogrammieren, Daten verändern, das System auf "Disable Interrupt" setzen und vieles andere mehr. Außerdem kann es durch ein Versetzen des Programmzählers zu falschen Programmsequenzen kommen, wobei sich der Mikrocomputer dann im Programm verirrt und in einer falschen Schleife verfängt.

Um solche Funktionsstörungen zu erkennen und gegebenenfalls automatisch zu beheben, bedient man sich Vorrichtungen zur Eigenüberwachung, die in der englischsprachigen Literatur als "Watch-Dog"-(Wachhund-)Schaltungen bezeichnet werden. Diese Schaltungen ermöglichen mit einem geringen Zusatzaufwand eine relativ hohe Überwachungssicherheit.

Die Erfindung bezieht sich auf eine Vorrichtung zur Eigenüberwachung einer Schaltungsanordnung mit einem Mikroprozessor, mit einer an einen Kontrollimpulskanal angeschlossenen Auswertevorrichtung, die den zeitrichtigen Empfang von Kontrollimpulsen überwacht und bei einer Abweichung der empfangenen Kontrollimpulsfolge von einer vorgegebenen erwarteten Kontrollimpulsfolge ein Steuersignal abgibt, mit dessen Hilfe der Mikroprozessor rücksetzbar und/oder eine Vorrichtung zur Störungsmeldung aktivierbar ist.

Eine derartige Vorrichtung ist bereits aus der Zeitschrift Electronic Design 2, January 18, 1977, Seiten 90 und 92 bekannt.

Die bekannte Vorrichtung enthält eine Hardwareanordnung mit einem rücksetzbaren Zähler. Dieser wird bei einwandfreier Funktion des Mikrocomputer-Systems über ein Triggerimpulssignal in regelmäßigem Abstand getriggert. Treffen die Triggerimpulse rechtzeitig ein, so wird der Zähler neu gesetzt und somit daran gehindert, das Mikrocomputer-System neu zu starten. Fallen die Triggerimpulse aus, so wird der Zähler zurückgesetzt und bewirkt damit einen Neustart des Mikrocomputer-Systems. Da die Zeit bis zum Rücksetzen des Zählers größer ist als die Pulsfolgezeit der Kontrollimpulse, kann der Zähler bei einwandfreiem Betrieb nicht in seine Nullstellung zurückgesetzt werden. Die Kontrollimpulse werden softwaregesteuert vom Mikroprozessor über eine Ausgabe-Schnittstellenanordnung bzw. über eine Portleitung ausgegeben. Der Kontrollimpulskanal ist über einen Kondensator an den Mikroprozessor angeschlossen.

Ferner ist aus der Zeitschrift Elektronik 23/16.11.1984, Seiten 120 und 121 eine Vorrichtung zur Eigenüberwachung einer Schaltungsanordnung mit einem Mikrocomputer bekannt, bei der sowohl eine Watch-Dog-Schaltung als auch eine Vorrichtung zur Unterspannungsüberwachung vorgesehen sind. Der Mikroprozessor wird durch Reset-Signale zurückgesetzt, die von der Watch-Dog-Schaltung oder von der Vorrichtung zur Unterspannungsüberwachung abgegeben werden.

Untersuchungen im Rahmen der Erfindung haben jedoch gezeigt, daß bei einer derartigen Vorrichtung nicht vollkommen ausgeschlossen werden kann, daß die Schaltungsanordnung, die insbesondere ein Mikrocomputer-System oder ein Einchip-Mikrocomputer ist, in eine falsche Programmsequenz springt, bei der zufällig der überwachte Port angesteuert und geschaltet wird und daß in diesem Fall die "Watch-Dog"-Schaltung nicht ansprechen kann.

Aufgabe der Erfindung ist es daher, eine Vorrichtung zur Eigenüberwachung einer Schaltungsanordnung mit einem Mikrocomputer derart auszubilden, daß ein Arbeiten des Mikroprozessors in fehlerhaften Programmsequenzen mit möglichst großer Wahrscheinlichkeit erkannt wird.

Gemäß der Erfindung wird die Vorrichtung zur Lösung dieser Aufgabe derart ausgebildet, daß die Schaltungsanordnung mit wenigstens zwei Kontrollimpulskanälen versehen ist und an die Kontrollimpulskanäle Gruppen von Kontrollimpulsen abgibt, die eine vorgegebene zeitliche Zuordnung zueinander aufweisen und daß die Auswerteeinrichtung eine Überwachungsvorrichtung zur Überwachung sowohl der Kontrollimpulse als auch der zeitlichen Zuordnung der Kontrollimpulse enthält.

Durch diese Maßnahmen ergibt sich der Vorteil, daß die Wahrscheinlichkeit, daß ein fehlerhafter Betriebszustand des Mikroprozessors von der Vorrichtung zur Eigenüberwachung nicht erkannt wird, gegenüber bekannten vergleichbaren Vorrichtungen erheblich verringert wird. Hierdurch ergibt sich für Einrichtungen, in denen die überwachten Mikrocomputer verwendet werden, eine wesentlich erhöhte Betriebssicherheit.

Aus der US 4 072 852 ist bereits eine Vorrichtung zur Eigenüberwachung einer Schaltungsanordnung mit einem Prozessor bekannt, bei der eine Watch-Dog-Schaltung unter Zwischenschaltung eines Adressendecoders an einem Prozessor angeschlossen ist. Dabei ist der Decoder über einen Adressenbus und eine STROBE-Leitung an den Prozessor angeschlossen. Da die STROBE-Leitung zum Adressenbus gehört, ist nur ein Kontrollimpulskanal im Sinne vorliegender Erfindung vorhanden.

Man kann in der Auswertevorrichtung Vergleichsimpulse erzeugen, die wenigstens in einem zeitlichen Teilbereich mit den erwarteten Kontrollimpulsen übereinstimmen und die Kontrollimpulse und die örtlich erzeugten Vergleichsimpulse einem Vergleicher zuführen, der bei Abweichungen ein Fehlersignal abgibt.

In weiterer Ausgestaltung der Erfindung wird die Schaltungsanordnung derart ausgebildet, daß die Überwachungsvorrichtung eine Überwachungsschaltung zur Erzeugung eines Bestätigungssignals bei jedem Empfang einer Gruppe von Kontrollimpulsen mit der vorgegebenen gegenseitigen zeitlichen Zuordnung und eine an die Überwachungsschaltung angeschlossene, durch die Bestätigungssignale retriggerbare Zeitschaltung enthält. Als retriggerbare Zeitschaltung kann insbesondere ein retriggerbares Monoflop oder ein rücksetzbarer oder voreinstellbarer Zähler dienen. Die Impulse der Impulsfolgen können in gleichen oder in verschieden großen Zeitabständen aufeinanderfolgen. Wesentlich ist, daß ein vorgegebener zeitlicher Höchstabstand nicht überschritten wird.

Dabei wird in der Überwachungsschaltung eine Kontrollimpulsgruppe nach der anderen - unmittelbar oder nach Umwandlung in einer Impulswandlerschaltung - hinsichtlich der zeitlichen Zuordnung der Kontrollimpulse und getrennt davon ein rechtzeitiges Eintreffen der als korrekt befundenen Impulsgruppen überwacht.

Dabei ergibt sich der Vorteil, daß am Ausgang der Überwachungsschaltung Kontrollimpulse zur weiteren Auswertung zur Verfügung stehen, die in besonders hohem Maße repräsentativ für die Funktion der überwachten Schaltungsanordnung sind. Ferner ist die Überwachungsvorrichtung dabei in vorteilhafter Weise aus einfach realisierbaren und ihrerseits mit einfachen Mitteln prüfbaren Teilschaltungen zusammengesetzt.

Für die zeitliche gegenseitige Zuordnung der Kontrollimpulse einer Kontrollimpulsgruppe gibt es verschiedene Möglichkeiten. Eine Erkenntnis im Rahmen der Erfindung besteht darin, daß es im Hinblick auf eine möglichst wenig aufwendige Ausgestaltung der Auswerteeinrichtung von Vorteil ist, wenn einander zeitlich überlappende Kontrollimpulse auf Koinzidenz überprüft werden.

Eine zweckmäßige Weiterbildung der Erfindung besteht daher darin, daß die Kontrollimpulskanäle bei störungsfreiem Betrieb der Schaltungsanordnung Impulsfolgen mit derartigen Phasenlagen führen, daß sich jeweils die zu ein und derselben Gruppe gehörenden Kontrollimpulse wenigstens zum Teil zeitlich überlappen und daß die Überwachungsschaltung als Koinzidenzschaltung ausgebildet ist. In vorteilhafter Weise ist dabei keine Vorumwandlung der Gruppen von Kontrollimpulsen erforderlich.

Die Koinzidenzschaltung kann insbesondere ein UND-Glied oder ein NOR-Glied sein.

Andererseits können Kontrollimpulse zur Auswertung kommen, die einander nicht zeitlich überlappen, insbesondere dann, wenn derartige Impulse in der Schaltungsanordnung ohne weiteres zur Verfügung stehen. Derartige Kontrollimpulse können dadurch einer Auswertung durch eine wenig aufwendige Auswerteeinrichtung zugeführt werden, daß die Kontrollimpulskanäle bei störungsfreiem Betrieb der Schaltungsanordnung Impulsfolgen mit derartigen Phasenlagen führen, daß jeweils die zu ein und derselben Gruppe gehörenden Kontrollimpulse überlappungsfrei auftreten und daß die Überwachungsschaltung eine Kettenschaltung aus einer Impulswandlerschaltung und einer Koinzidenzschaltung enthält, und daß die Impulswandlerschaltung die überlappungsfrei auftretenden Impulse in zeitlich überlappende Impulse umwandelt. Die Impulswandlerschaltung kann insbesondere eine Anordnung zur Impulsverzögerung und/oder -verlängerung sein.

Vorzugsweise enthält die Impulswandlerschaltung wenigstens in einem Kontrollimpulskanal ein flankentriggerbares Monoflop, das für eine ausreichend große Impulsverlängerung sorgt.

In Weiterbildung der Erfindung lassen sich fehlerhafte Dauerpotentiale an den Kontrollimpulskanälen für die Auswertung der Kontrollimpulse dadurch eliminieren, daß der Auswerteeinrichtung eine Anordnung zur Potentialtrennung vorgeschaltet ist, die Gleichspannungen sperrt und die Kontrollimpulse überträgt. Hierfür sind entsprechend bemessene RC-Glieder besonders geeignet.

In weiterer Ausgestaltung der Erfindung lassen sich statische Ausfallsignale dadurch gewinnen, daß die retriggerbare Zeitschaltung durch Impulszähler gebildet ist, der mit seinem Clock-Eingang an einen Taktgeber angeschlossen ist und der an einem Ausgang bei einer vorgegebenen Zählerstellung das Steuersignal abgibt, und daß das Steuersignal an eine Vorrichtung zur Sperrung des Taktes am Impulszähler geführt ist. Dabei wird bei fehlerhafter überwachter Schaltungsanordnung der Impulszähler der Überwachungsvorrichtung festgehalten, so daß sich das gewünschte statische Ausfallsignal, insbesondere für Anzeigezwecke, ohne wesentlichen zusätzlichen Aufwand gewinnen läßt.

Zweckmäßigerweise wird der Mikroprozessor der überwachten Schaltungsanordnung durch Rücksetzimpulse neu gestartet, und zwar durch Rücksetzimpulse mit einem derartigen zeitlichen Abstand, daß der gestartete Mikroprozessor in der Lage ist, bei einwandfreiem Betrieb durch Triggerung der in der Überwachungsvorrichtung enthaltenen Zeitschaltung eine Bildung weiterer Rücksetzimpulse zu unterbinden. Eine solche Schaltungsanordnung ist insbesondere derart ausgebildet, daß ein Rücksetzeingang der Schaltungsanordnung mit einem Mikroprozessor an ein UND-Glied angeschlossen ist, das mit einem Eingang am Ausgang eines Taktgebers und einem weiteren Eingang am Ausgang des Zählers liegt.

Als Taktgeber kann ein eigener Impulsgeber oder der dem Impulszähler vorgeschaltete Taktgeber, gegebenenfalls mit Frequenzteiler, dienen. Dabei wird aus einem statischen Ausgangssignal der Überwachungsvorrichtung eine Impulsfolge gebildet und zugleich sichergestellt, daß das statische Ausgangssignal bei einwandfreiem Anlaufen der überwachten Schaltungsanordnung selbsttätig gelöscht wird.

Eine besonders weitgehende Erfassung fehlerhafter Betriebszustände läßt sich dadurch erzielen, daß bei Ausbildung der Schaltungsanordnung als Mikrocomputer mit mehreren Peripheriebausteinen die Kontrollimpulskanäle jeweils an einen eigenen Peripheriebaustein angeschlossen sind.

Fehlfunktionen können besonders kritisch in Mikrocomputer-Systemen für Steuerungs- und andere Fernwirkanlagen sein. Fernwirkunterstationen sind vielfach schwer zugänglich, so daß Funktionsstörungen der Geräte möglichst vermieden werden müssen. Störeinflüsse, denen insbesondere Fernwirkgeräte ausgesetzt werden, sind Netzstörungen, kurzzeitige Netzeinbrüche oder starke elektromagnetische Störfelder. Sie können eine Vielzahl von Ursachen haben, wie z.B. Blitzschlag, Schaltvorgänge in elektrischen Anlagen oder Bahnen oder dergleichen.

Besonders vorteilhaft ist eine Verwendung der Vorrichtung in einer unbesetzten Station einer Fernwirkeinrichtung, da in diesem Fall eine Erkennung fehlerhafter Betriebszustände von besonderer Bedeutung, insbesondere für eine zuverlässige selbsttätige Wiederinbetriebnahme der Schaltungsanordnung ist.

Die Vorrichtung zur Eigenüberwachung läßt sich besonders vorteilhaft in Fernwirkgeräten verwenden, bei denen eine große Sicherheit gegen Fehlfunktionen der Geräte verlangt wird, vorzugsweise in Unterstationen, die sich an einem von einer besetzten Station abgelegenen Ort befinden.

Die Erfindung wird anhand der in den Figuren dargestellten Ausführungsbeispiele näher erläutert.

Es zeigen

Fig. 1 eine Vorrichtung zur Eigenüberwachung einer Schaltungsanordnung mit einem Mikroprozessor, mit einem UND-Glied als Auswerteeinrichtung zur Überwachung von einander zeitlich überlappenden Kontrollimpulsen. Nach

Fig. 2 kann bei negativen Kontrollimpulsen anstelle des UND-Gliedes ein NOR-Glied treten. Nach

Fig. 3 kann bei zeitlich nicht überlappenden Kontrollimpulsen ein Impulswandler zur Erzeugung zeitlich überlappender Impulse Verwendung finden. In

Fig. 4 ist ein Ausführungsbeispiel für den nach Fig. 1 verwendeten Rücksetzgenerator und in

Fig. 5 ein Ausführungsbeispiel für eine zu überwachende Schaltungsanordnung dargestellt.

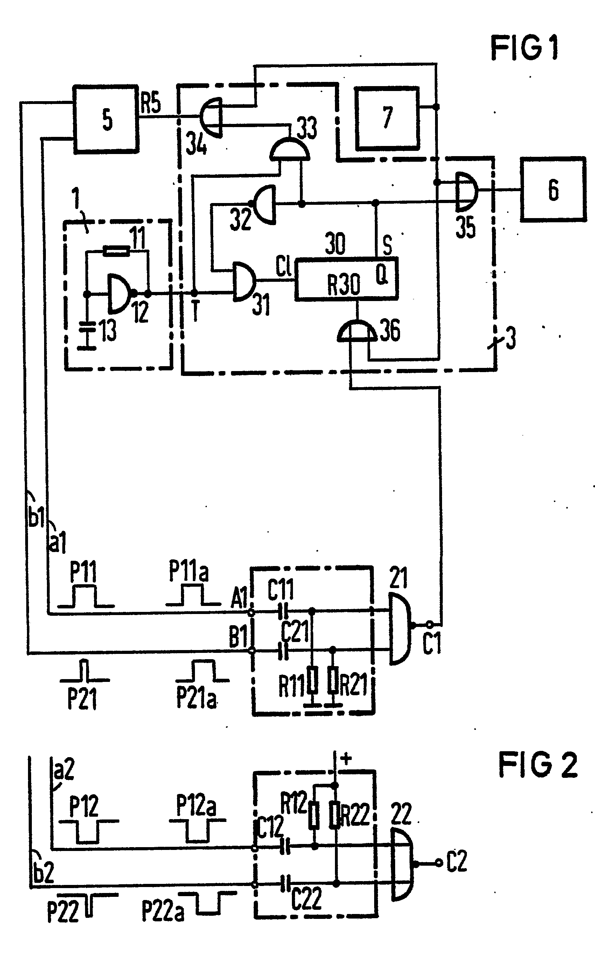

Fig. 1 zeigt eine Vorrichtung zur Eigenüberwachung der Schaltungsanordnung 5 mit einem Mikroprozessor, die insbesondere ein Mikrocomputer-System, oder ein Einchip-Mikrocomputer ist. Der Mikroprozessor der Schaltungsanordnung 5 gibt an die beiden Kontrollimpulskanäle a1 und b1 periodisch Gruppen von Kontrollimpulsen ab. Jede Impulsgruppe besteht aus einem Impuls je Kontrollimpulskanal a1 bzw. b1. Die beiden Kontrollimpulse ein und derselben Gruppe haben eine bestimmte zeitliche Zuordnung zueinander.

Bei der Vorrichtung nach Fig. 1 müssen sich die beiden Kontrollimpulse P11 und P21 bzw. P11a und P21a überlappen. Sind die Kontrollimpulse P11, P21 bzw. P11a, P21a nicht oder nicht nach den geforderten Zeitbedingungen vorhanden, so ergibt sich folgender Ablauf: Der Taktgeber 1, bestehend aus einem RC-Glied 11, 13 und dem CMOS-Schmitt-Trigger 12, gibt an seinem Ausgang einen Takt T ab, dessen Frequenz z.B. 1 Hz beträgt. Dieser Takt T ist über das als Torschaltung dienende UND-Glied 31 auf den Clockeingang C1 des Binärzählers 30 geschaltet und taktet diesen so lange vorwärts, bis der Ausgang Q auf die logische "1" schaltet und über den Inverter 32 das UND-Glied 31 und somit den Takt T für den Binärzähler 30 sperrt.

Die logische "1" vom Ausgang Q steuert über das ODER-Glied 35 die Einrichtung 6 zur Störungssignalisierung und zur Portsperrung und über das ODER-Glied 34 den Reset-Eingang R5 des in der Schaltungsanordnung 5 enthaltenen Mikroprozessors.

Um zu vermeiden, daß der Mikroprozessor fest im rückgesetzten Zustand gehalten wird, ist der Takt T außerdem an das UND-Glied 33 geführt, dessen einer Eingang an den Ausgang des Taktgebers 1 und dessen anderer Eingang an den Ausgang Q des Binärzählers 30 angeschlossen ist. In der Phase, während der der Takt T die logische "0" führt, schaltet die vom UND-Glied 33 über das ODER-Glied 34 zum Rücksetzeingang R5 des Mikroprozessors führende Leitung ebenfalls auf die logische "0" und ermöglicht es damit dem Mikroprozessor neu zu starten.

Gelingt der Start des Mikroprozessors und arbeitet die Schaltungsanordnung 5 einwandfrei, so gibt der Mikroprozessor an die beiden Kontrollimpulskanäle periodisch die Gruppen von Kontrollimpulsen P11, P21 bzw. P11a, P21a ab. Die beiden Kontrollimpulse P11, P21 bzw. P11a, P21a erscheinen in der geforderten zeitlichen Zuordnung und setzen über das als Koinzidenzschaltung dienende UND-Glied 21 und den Eingang R30 den Binärzähler 30 fortlaufend zurück. Durch diese Ansteuerung arbeitet der Binärzähler 30 wie eine retriggerbare monostabile Kippstufe.

Fig. 1 zeigt außerdem die Impulsform der Kontrollimpulse P11, P21 bzw. P11a, P21a. Danach liegen die Kontrollimpulse im Ruhezustand auf der logischen "0" und schalten im aktiven Zustand auf die logische "1". Als Koinzidenzschaltung für die Kontrollimpulse der beiden Triggerkanäle bzw. Kontrollimpulskanäle a1 und b1 dient daher ein Verknüpfungsglied für positive Logik, nämlich das UND-Glied 21. An beiden Eingängen des UND-Gliedes 21 ist jeweils ein RC-Glied C11, R11 bzw. C21, R21 mit einem in einem Längszweig liegenden Kondensator und einem in einem Querzweig liegenden Widerstand vorgeschaltet. Die RC-Glieder C11, R11 und C21, R21 haben jeweils eine so große Zeitkonstante, daß sie die Kontrollimpulse P11, P21 bzw. P11a, P21a praktisch nicht verändern. Insbesondere ist die Zeitkonstante jeweils so klein bemessen, wie im Hinblick auf eine sichere Auswertung der Impulse noch zulässig ist. Durch die RC-Glieder C11, R11 und C21, R21 wird aber verhindert, daß bei einer Funktionsstörung des Mikroprozessors, bei der an wenigstens einer der Triggerleitungen bzw. Kontrollimpulskanäle a1, b1 zufällig statisch die logische "1" liegt, ein einwandfreier Betrieb der Schaltungsanordnung vorgetäuscht wird.

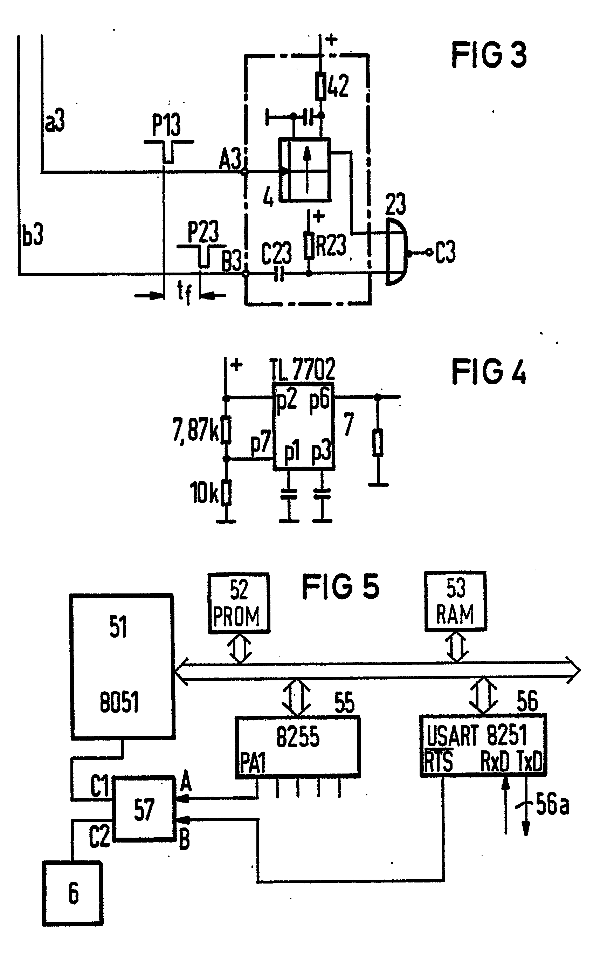

Die Vorrichtung zur Eigenüberwachung ist zusätzlich mit dem Rücksetzgenerator 7 versehen, der z.B. entsprechend Fig. 4 vom Typ TL7702 in der in der Figur angegebenen Beschaltung sein kann, wobei die Anschlußnummern jeweils durch ein vorangestelltes "p" ergänzt sind, um Verwechslungen mit den in den Figuren verwendeten Bezugszeichen zu vermeiden. Der Ausgang des Rücksetzgenerators 7 ist über das ODER-Glied 34 an den Rücksetzeingang R5 des Mikroprozessors geführt. Der Rücksetzgenerator 7 bewirkt ein statisches System-Rücksetzsignal während der Einschaltphase sowie bei kurzzeitigen Netzeinbrüchen bzw. dauernder Netzunterspannung.

Der Ausgang des Rücksetzgenerators 7 ist ferner über das ODER-Glied 35 an die Einrichtung 6 zur Störungssignalisierung und über das ODER-Glied 36 an den Rücksetzeingang R30 des Binärzählers 30 geführt. Auf diese Weise können im Zusammenwirken der Auswerteeinrichtung und des Rücksetzgenerators 7 Fehlfunktionen des Mikrocomputer-Systems besonders weitgehend unterbunden werden.

Als Taktgeber 1 kann vorteilhaft ein Taktgeber verwendet werden, der bereits für andere Zwecke in der Einrichtung enthalten ist, zu der die zu überwachende Schaltungsanordnung 5 gehört, insbesondere ein Generator zur Erzeugung eines Flackertaktes in einer Anzeigevorrichtung. Wesentlich ist dabei, daß der Takt vollkommen unabhängig von der Schaltungsanordnung 5 ist und ständig zur Verfügung steht.

Bei dem Ausführungsbeispiel nach Fig. 2 haben die Kontrollimpulse negative Polarität, d.h. sie liegen im Ruhezustand auf der logischen "1" und im aktiven Zustand auf der logischen "0". Als Koinzidenzschaltung zur Verknüpfung der Kontrollimpulse dient das NOR-Glied 22.

Das Ausführungsbeispiel nach Fig. 3 bezieht sich auf den Fall, daß die Kontrollimpulse ein und derselben Gruppe von Kontrollimpulsen sich nicht zeitlich überlappen, sondern kurz aufeinanderfolgend auftreten. Mit Hilfe einer Impulswandlerschaltung wird aus der Gruppe einander nicht überlappender Impulse P13, P23 eine Gruppe von einander überlappenden Impulsen erzeugt. Dies geschieht dadurch, daß die Impulse eines Kontrollimpulskanals unverändert bleiben und die weiteren Kontrollimpulse so zeitlich verlängert werden, daß sich eine Überlappung ergibt. Zur Impulsverlängerung für den jeweils früher auftretenden Impuls dient das negativ-flankengetriggerte Monoflop 4, z.B. vom Typ F4528B. Dieses hat eine Rückfallzeit, die größer ist als die Impulsfolgezeit $t_f$, wobei unter Impulsfolgezeit $t_f$ die Zeit zu verstehen ist, die zwischen der Anstiegsflanke des zeitlich zu verlängernden Impulses P13 und der Anstiegsflanke des zugeordneten Impulses P23 verstreicht. Der zugeordnete Impuls P23 tritt dabei auf dem Kontrollimpulskanal b3 auf, der keine Impulswandlerschaltung aufweist.

Der Kontrollimpuls P13 des Kontrollimpulskanals a3 triggert das Monoflop 4. Der zweite Kontrollimpuls P23 des Kontrollimpulskanals b3 schaltet das über das Monoflop 4 vorbereitete NOR-Glied 23 durch; danach fällt das Monoflop 4 in seiner Ruhelage zurück und sperrt das NOR-Glied 23.

Bei den in den Fig. 1 bis 3 gezeigten Ausführungsbeispielen können für die Kontrollimpulskanäle Anschlüsse eines Einchip-Mikrocomputers bzw. Mikrocomputersystems Verwendung finden, an denen bereits geeignete Impulsfolgen auftreten, d.h. ein Anschluß, an dem spätestens nach Ablauf einer vorgegebenen Zeit ein Impuls kommen muß und wenigstens ein weiterer Anschluß, an dem Impulse mit entsprechender zeitlicher Zuordnung auftreten.

Man kann die Kontrollimpulskanäle an zwei oder mehr frei programmierbare Ausgänge oder an zwei oder mehr benutzte Ausgänge anschließen. Gegebenenfalls kann wenigstens ein benutzter Ausgang bzw. Port zusammen mit mindestens einem frei programmierbaren Ausgang bzw. Port Verwendung finden.

Handelt es sich bei der zu überwachenden Schaltungsanordnung um eine Zentralstation einer Fernwirkanlage, die in regelmäßigen Abständen Abfragetelegramme sendet, so kann z.b. eine Folge von Sendebereitschaftskriterien als eine Kontrollimpulsfolge Verwendung finden. Insbesondere bei einer Unterstation, die nur auf einen Anruf hin sendet, kann es zweckmäßig sein, für die Kontrollimpulskanäle ausschließlich Anschlüsse von frei programmierbaren Ports zu verwenden.

Findet wenigstens ein frei programmierbarer Port in Verbindung mit einem bereits benutzten und daher nicht mehr frei programmierbaren Port Verwendung, so kann es zweckmäßig sein, einen Kontrollimpulskanal an einen Anschluß, an dem Stroboimpulse zur Aktivierung eines Peripheriebausteins auftreten, anzuschließen.

Die gewünschte zeitliche Zuordnung der Kontrollimpulse läßt sich, falls im betreffenden Anwendungsfall nicht ohnehin bereits vorhanden, durch eine entsprechende, gegebenenfalls ergänzende Programmierung des Einchip-Mikrocomputers bzw. Mikrocomputersystems erzielen, wobei die bei der Programmierung von Ablaufsteuerungen oder dergleichen üblichen Maßnahmen Verwendung finden können.

Vorteilhaft kann es sein, die Kontrollimpulskanäle an Peripheriebausteine eines Mikrocomputersystems anzuschließen. Dabei sind die Peripheriebausteine in vorteilhafter Weise in die Eigenüberwachung mit einbezogen und der Mikroprozessor selbst braucht keine frei programmierbaren Ausgänge zu haben.

Andererseits kann man bei Verwendung eines Einchip-Mikrocomputers, dessen Ports wahlweise als Ein- oder Ausgang programmiert werden können, zwei oder mehr Ausgänge für die Kontrollimpulsfolgen verwenden. Von dieser Art ist z.B. der Mikrocomputer 8051.

Bei dem in Fig. 5 gezeigten Ausführungsbeispiel ist ein Mikrocomputersystem mit einer Anordnung zur Eigenüberwachung versehen. Bei diesem Mikrocomputersystem sind der Mikroprozessor 51, das PROM 52, das RAM 53 und die Peripheriebausteine 55 und 56 über Busleitungen 54 miteinander verbunden. Die Überwachungsvorrichtung 57 ist mit ihrem Eingang A an den Peripheriebaustein 55 und mit ihrem Eingang B an den Peripheriebaustein 56 angeschlossen. Der Peripheriebaustein 55 vom Typ 8255 hat periphere Ausgänge, die jeweils eine parallele Schnittstelle darstellen. Im vorliegenden Beispiel erfüllt der Anschluß PA1 die Forderung, daß jeweils spätestens nach Ablauf einer vorgegebenen Zeit ein Impuls kommen muß. An diesen Anschluß PA1 ist der Eingang A der Auswertevorrichtung 57 angeschlossen.

Der Peripheriebaustein 56 ist ein USART vom Typ 8251, der eine serielle Schnittstelle 56a hat. Der Peripheriebaustein 56 hat einen u.a. Steuerausgang RTS, der durch den Mikroprozessor 51 frei programmierbar ist. An diesen frei programmierbaren Ausgang ist der Eingang B der Auswerteeinrichtung 57 angeschlossen. Die Auswerteeinrichtung 57 gibt im Störungsfall über den Ausgang C1 Rücksetzpotential an den Rücksetzeingang R des Mikroprozessors 51 und über den Ausgang C2 Alarmpotential an die Einrichtung 6 zur Störungssignalisierung ab.

Bei Ausbildung des Mikrocomputersystems als Fernwirkzentrale oder Unterstation führt die serielle Schnittstelle 56a über die Übertragungseinrichtungen zu den anderen Einrichtungen des Fernwirknetzes.

Die den peripheren Ausgang bildende parallele Schnittstelle des Peripheriebausteins 55 dient in einer Zentralstation, z.B. zum Anschluß eines Lampenfeldes, in einer Unterstation, z.B. zum Anschluß von zu steuernden Einrichtungen.

## Patentansprüche

1. Vorrichtung zur Eigenüberwachung einer Schaltungsanordnung (5) mit einem Mikroprozessor, mit einer an einen Kontrollimpulskanal (a1, b1; a2, b2; a3, b3) angeschlossenen Auswertevorrichtung, die den zeitrichtigen Empfang von Kontrollimpulsen (P11, P11a; P12, P12a; P13, P23) überwacht und bei einer Abweichung der empfangenen Kontrollimpulsfolge von einer vorgegebenen erwarteten Kontrollimpulsfolge ein Steuersignal (C1, C2, C3) abgibt, mit dessen Hilfe der Mikroprozessor rücksetzbar und/oder eine Vorrichtung zur Störungsmeldung (6) aktivierbar ist, dadurch gekennzeichnet, daß die Schaltungsanordnung (5) mit wenigstens zwei Kontrollimpulskanälen (a1, b1; a2, b2; a3, b3) versehen ist und an die Kontrollimpulskanäle (a1, b1; a2, b2; a3, b3) Gruppen von Kontrollimpulsen (P11, P21; P11a, P21a; P12, P22; P12a, P22a; P13, P23) abgibt, die eine vorgegebene zeitliche Zuordnung zueinander aufweisen und daß die Auswerteeinrichtung eine Überwachungsvorrichtung (21; 22; 23) zur Überwachung sowohl der Kontrollimpulse (P11, P21; P11a, P21a; P12, P22; P12a, P22a; P13, P23) als auch der zeitlichen Zuordnung der Kontrollimpulse enthält.

2. Vorrichtung nach Anspruch 1, dadurch gekennzeichnet, daß die Überwachungsvorrichtung eine Überwachungsschaltung zur Erzeugung eines Bestätigungssignals bei jedem Empfang einer Gruppe von Kontrollimpulsen (P11, P21; P11a, P21a; P12, P22; P12a, P22a; P13, P23) mit der vorgegebenen gegenseitigen zeitlichen Zuordnung und eine an die Überwachungsschaltung angeschlossene, durch die Bestätigungssignale retriggerbare Zeitschaltung (3) enthält.

3. Vorrichtung nach Anspruch 2, dadurch gekennzeichnet, daß die Kontrollimpulskanäle (a1, b1; a2, b2) bei störungsfreiem Betrieb der Schaltungsanordnung Impulsfolgen mit derartigen Phasenlagen führen, daß sich jeweils die zu ein und derselben Gruppe gehörenden Kontrollimpulse (P11, P21; P11a, P21a; P12, P22; P12a, P22a) wenigstens zum Teil zeitlich überlappen und daß die Überwachungsschaltung als Koinzidenzschaltung ausgebildet ist.

4. Vorrichtung nach Anspruch 2, dadurch gekennzeichnet, daß die Kontrollimpulskanäle (a3, b3) bei störungsfreiem Betrieb der Schaltungsanordnung Impulsfolgen mit derartigen Phasenlagen führen, daß jeweils die zu ein und derselben Gruppe gehörenden Kontrollimpulse (P13, P23) überlappungsfrei auftreten und daß die Überwachungsschaltung eine Kettenschaltung aus einer Impulswandlerschaltung und einer Koinzidenzschaltung enthält, und daß die Impulswandlerschaltung die überlappungsfrei auftretenden Impulse in zeitlich überlappende Impulse umwandelt.

5. Vorrichtung nach Anspruch 4, dadurch gekennzeichnet, daß die Impulswandlerschaltung wenigstens ein flankentriggerbares Monoflop (4) enthält.

6. Vorrichtung nach einem der Ansprüche 1 bis 5, dadurch gekennzeichnet, daß der Auswerteeinrichtung eine Anordnung (C11, R11; C21, R21; C12, R12; C22, R22; C23, R23) zur Potentialtrennung vorgeschaltet ist, die Gleichspannungen sperrt und die Kontrollimpulse (P11, P21; P11a, P21a; P12, P22; P12a, P22a; P13, P23) überträgt.

7. Vorrichtung nach einem der Ansprüche 2 bis 6, dadurch gekennzeichnet, daß die retriggerbare Zeitschaltung (3) durch einen Impulszähler (30) gebildet ist, der mit seinem Clock-Eingang (CL) an einen Taktgeber (1) angeschlossen ist und der an einem Ausgang (Q) bei einer vorgegebenen Zählerstellung das Steuersignal (S) abgibt, und daß das Steuersignal an eine Vorrichtung (31, 32) zur Sperrung des Taktes am Impulszähler (30) geführt ist.

8. Vorrichtung nach Anspruch 7, dadurch gekennzeichnet, daß ein Rücksetzeingang (R5) der Schaltungsanordnung (5) mit einem Mikroprozessor an ein UND-Glied (33) angeschlossen ist, das mit einem Eingang am Ausgang eines Taktgebers (1) und einem weiteren Eingang am Ausgang (Q) des Zählers (30) liegt.

9. Vorrichtung nach einem der Ansprüche 1 bis 8, dadurch gekennzeichnet, daß bei Ausbildung der Schaltungsanordnung als Mikrocomputersystem mit mehreren Peripheriebausteinen wenigstens ein Teil der Kontrollimpulskanäle (a1, b1; a2, b2; a3, b3) jeweils an einen eigenen Peripheriebaustein angeschlossen sind.

10. Vorrichtung nach einem der vorhergehenden Ansprüche, gekennzeichnet durch eine Verwendung in einer unbesetzten Station einer Fernwirkeinrichtung.

## Claims

1. Apparatus for self-monitoring a circuit (5) containing a microprocessor, having an evaluation device connected to a control pulse channel (a1, b1; a2, b2; a3, b3) which monitors the reception of control pulses (P11, P11a; P12, P12a; P13, P23) at the correct time and, when the received control pulse train deviates from a predetermined expected control pulse train, outputs a control signal (C1, C2, C3), with the aid of which the microprocessor can be reset and/or a device for signalling malfunctions (6) can be activated, characterized in that the circuit (5) is provided with at least two control pulse channels (a1, b1; a2, b2, a3, b3) and outputs to the control pulse channels (a1, b1; a2, b2; a3, b3) groups of control pulses (P11, P21; P11a, P21a; P12, P22; P12a,

P22a; P13, P23) which have a predetermined temporal assignment to one another, and in that the evaluation device contains a monitoring device (21; 22; 23) for monitoring both the control pulses (P11, P21; P11a, P21a; P12, P22; P12a, P22a; P13, P23) and the temporal assignment of the control pulses.

2. Apparatus according to Claim 1, characterized in that the monitoring device contains a watchdog circuit for generating an acknowledgement signal each time a groupe of control pulses (P11, P21; P11a, P21a; P12, P22; P12a, P22a; P13, P23) with the predetermined mutual temporal assignment is received, and a time circuit (3) which is connected to the watchdog circuit and can be retriggered by the acknowledgement signals.

3. Apparatus according to Claim 2, characterized in that, during fault-free operation of the circuit, the control pulse channels (a1, b1; a2, b2) carry pulse trains with phase positions in such a way that in each case the control pulses (P11, P21; P11a, P21a; P12, P22; P12a, P22a) belonging to one and the same group temporally overlap one another at least in part, and in that the watchdog circuit is designed as a coincidence circuit.

4. Apparatus according to Claim 2, characterized in that, during fault-free operation of the circuit, the control pulse channels (a3, b3) carry pulse trains with phase positions in such a way that in each case the control pulses (P13, P23) belonging to one and the same group occur without overlapping, and in that the watchdog circuit comprising a pulse conversion circuit and a coincidence circuit, and in that the pulse conversion circuit converts the pulses occurring without overlapping into temporally overlapping pulses.

5. Apparatus according to Claim 4, characterized in that the pulse conversion circuit contains at least one edge-triggerable monoflop (4).

6. Apparatus according to one of Claims 1 to 5, characterized in that connected upstream of the evaluation device is an arrangement (C11, R11; C21, R21; C12, R12; C22, R22; C23, R23) for potential separation which blocks DC voltages and transmits the control pulses (P11, P21; P11a, P21a; P12, P22; P12a, P22a; P13, P23).

7. Apparatus according to one of Claims 2 to 6, characterized in that the retriggerable time circuit (3) is formed by a pulse counter (30), which is connected with its clock input (CL) to a clock generator (1), and which outputs at one output (Q) the control signal (S) in the case of a predetermined counter position, and in that the control signal is fed to a device (31, 32) for blocking the clock pulse at the pulse counter (30).

8. Apparatus according to Claim 7, characterized in that a reset input (R5) of the circuit (5) containing a microprocessor is connected to an AND element (33), which is connected with one input to the output of a clock generator (1) and with a further input to the output (Q) of the counter (30).

9. Apparatus according to one of Claims 1 to 8, characterized in that, where the circuit is designed as a microcomputer system having a plurality of peripheral components, at least a portion of the control pulse channels (a1, b1; a2, b2; a3, b3) are connected in each case to a peripheral component of their own.

10. Apparatus according to one of the preceding claims, characterized by employment in an unattended station of a telecontrol device.

**Revendications**

1. Dispositif d'auto-contrôle d'un montage (5) comportant un microprocesseur, un dispositif d'évaluation qui est raccordé à un canal (a1, b1; a2, b2; a3, b3) de transmission d'impulsions de contrôle, contrôle la réception correcte dans le temps d'impulsions de contrôle (P11, P11a; P12, P12a; P13, P23) et, dans le cas d'un écart du train d'impulsions de contrôle reçu par rapport à un train attendu prédéterminé d'impulsions de contrôle, délivre un signal de commande (C1, C2, C3), à l'aide duquel le microprocesseur peut être ramené à l'état initial et/ou un dispositif (6) de signalisation de perturbations peut être activé, caractérisé par le fait que le montage (5) comporte au moins deux canaux (a1, b1; a2, b2; a3, b3) de transmission d'impulsions de contrôle et délivre aux canaux (a1, b1; a2, b2; a3, b3) d'impulsions de contrôle, des groupes d'impulsions de contrôle (P11, P21; P11a, P21a; P12, P22; P12a, P22a; P13, P23), qui présentent entre eux une association temporelle prédéterminée et que le dispositif d'évaluation comporte un dispositif de contrôle (21; 22; 23) servant à contrôler aussi bien les impulsions de contrôle (P11, P21; P11a, P21a; P12, P22; P12a, P22a; P13, P23) que l'association temporelle des impulsions de contrôle.

2. Dispositif suivant la revendication 1, caractérisé par le fait que le dispositif de contrôle comporte un circuit de contrôle servant à produire un signal d'accusé de réception lors de la réception de chaque groupe d'impulsions de contrôle (P11, P21; P11a, P21a; P12, P22; P12a, P22a; P13, P23) présentant l'association temporelle réciproque prédéterminée, et un circuit de temporisation (3) raccordé au circuit de contrôle et pouvant être redéclenché par les signaux d'actionnement.

3. Dispositif suivant la revendication 2, caractérisé par le fait que les canaux (a1, b1; a2, b2) de transmission des impulsions de contrôle véhiculent, dans le cas d'un fonctionnement du montage sans perturbation, des trains d'impulsions possédant des positions de phase telles que les impulsions de contrôle (P11, P21; P11a, P21a; P12, P22; P12a, P22a; P13, P23), qui appartiennent à un même groupe, se chevauchent respectivement au moins en partie dans le temps et que le circuit de contrôle est réalisé sous la forme d'un circuit à coïncidence.

4. Dispositif suivant la revendication 2, caractérisé par le fait que les canaux (a3, b3) de transmission des impulsions de contrôle véhiculent, dans le cas d'un fonctionnement non perturbé du montage, des trains d'impulsions possédant des positions de phase telles que les impulsions de contrôle (P13, P23), qui appartiennent au même groupe, qui apparaissent respectivement sans chevauchement et que le circuit de contrôle contient un circuit itératif formé d'un circuit formant transformateur d'impulsions et d'un circuit à coïncidence, et que le circuit formant transformateur d'impulsions convertit les impulsions qui apparaissent sans chevauchement, en des impulsions présentant un chevauchement dans le temps.

5. Dispositif suivant la revendication 4, caractérisé par le fait que le circuit formant transformateur d'impulsions comporte au moins un multivibrateur monostable (4), qui peut être déclenché par les flancs des impulsions.

6. Dispositif suivant l'une des revendications 1 à 5, caractérisé par le fait qu'en amont du dispositif d'évaluation est branché un dispositif (C11, R11; C21, R21; C12, R12; C22, R22; C23, R23), qui sert à réaliser la séparation du potentiel, qui bloque les tensions continues et qui transmet les impulsions de contrôle (P11, P21; P11a, P21a; P12, P22; P12a, P22a; P13, P23).

7. Dispositif suivant l'une des revendications 2 à 6, caractérisé par le fait que le circuit de temporisation redéclenchable (3) est formé par un compteur d'impulsions (30), dont l'entrée (CL) des impulsions d'horloge est raccordée à un générateur de cadence (1) et qui délivre, sur une sortie (Q), le signal de commande (S) pour une position prédéterminée du compteur, et que le signal de commande est envoyé à un dispositif (31, 32) servant à bloquer la cadence envoyée au compteur d'impulsions (30).

8. Dispositif suivant la revendication 7, caractérisé par le fait qu'une entrée de remise à l'état initial (R5) du montage (5) comportant un microprocesseur est raccordé à un circuit ET (33), dont une entrée est raccordée à la sortie d'un générateur de cadence (1) et dont une autre entrée est raccordée à la sortie (Q) du compteur (30).

9. Dispositif suivant l'une des revendications 1 à 8, caractérisé par le fait que dans le cas de la réalisation du montage sous la forme d'un système à micro-ordinateur comportant plusieurs modules périphériques, au moins une partie des canaux (a1, b1; a2, b2; a3, b3) de transmission des impulsions de contrôle est raccordée respectivement à un module périphérique particulier.

10. Montage suivant l'une des revendications précédentes, caractérisé par son application dans une station non occupée d'une installation de télécommande.

FIG 1

FIG 2

**FIG 3**

**FIG 4**

**FIG 5**